Europäisches Patentamt

European Patent Office

Office européen des brevets

(19)

(11) Numéro de publication: **0 250 326 B1**

(12)

# FASCICULE DE BREVET EUROPEEN

(45) Date de publication de fascicule du brevet:
**16.10.91**

(51) Int. Cl.⁵: **C03B 37/014**

(21) Numéro de dépôt: **87401374.1**

(22) Date de dépôt: **18.06.87**

(54) **Procédé de fabrication de préformes pour fibres optiques.**

(30) Priorité: **20.06.86 FR 8608946**

(43) Date de publication de la demande:
**23.12.87 Bulletin 87/52**

(45) Mention de la délivrance du brevet:
**16.10.91 Bulletin 91/42**

(84) Etats contractants désignés:
**DE ES GB IT NL**

(56) Documents cités:
| | |
|---|---|
| **DE-A- 3 222 189** | **FR-A- 2 314 151** |
| **FR-A- 2 575 151** | **GB-A- 2 172 885** |
| **US-A- 4 191 545** | **US-A- 4 233 052** |
| **US-A- 4 402 720** | |

(73) Titulaire: **Le Noane, Georges**
**Kerrougant Bras**
**F-22730 Tregastel(FR)**

Titulaire: **Pavy, Dominique**
**Avenue du Park Nevez**
**F-22300 Lannion(FR)**

(72) Inventeur: **Le Noane, Georges**
**Kerrougant Bras**
**F-22730 Tregastel(FR)**
Inventeur: **Pavy, Dominique**
**Avenue du Park Nevez**
**F-22300 Lannion(FR)**

(74) Mandataire: **Mongrédien, André et al**
**c/o BREVATOME 25, rue de Ponthieu**
**F-75008 Paris(FR)**

## Description

La présente invention concerne un procédé de fabrication de préformes pour fibres optiques et un mandrin utilisable pour la mise en oeuvre de ce procédé. Elle s'applique tout particulièrement à la fabrication de fibres optiques monomodes (mais bien entendu également à la fabrication de fibres optiques multimodes).

Les procédés déjà connus pour la fabrication de préformes pour fibres optiques présentent au moins l'un des inconvénients suivants : les fibres optiques réalisées à partir des préformes sont coûteuses et/ou n'ont pas de bonnes caractéristiques géométriques et/ou n'ont pas une bonne résistance mécanique.

On connaît en particulier un procédé coûteux de fabrication de préformes pour fibres optiques monomodes, procédé selon lequel un tube peu épais de silice est recouvert sur sa face interne, d'un revêtement vitreux approprié, par MCVD (dépôt chimique en phase vapeur modifié) ou par PCVD (dépôt chimique en phase vapeur par plasma), puis chemisé par un tube épais de silice.

La présente invention a pour but de remédier aux inconvénients précédents en proposant un procédé de fabrication de préformes qui permettent d'aboutir à des fibres optiques (notamment monomodes) de faible coût et de forte résistance mécanique, procédé qui, dans un mode de réalisation préféré, permet la fabrication de préformes conduisant à des fibres optiques de bonnes caractéristiques géométriques.

On connaît, par le document DE-A-3 222 189, un procédé correspondant au préambule de la revendication 1.

De façon précise, la présente invention a pour objet un procédé de fabrication d'une préforme, pour fibres optiques, comprenant une étape de dépôt, sur la face interne d'un tube de silice, d'un revêtement vitreux destiné à la formation ultérieure du coeur des fibres optiques, le dépôt, du revêtement étant réalisé en faisant passer continûment, d'une extrémité à l'autre du tube, un mélange de composés gazeux ionisables et aptes à donner naissance au revêtement par réaction entre eux, tout en formant dans le tube, à l'aide d'un coupleur hyperfréquence, une colonne de plasma destinée à activer la réaction, et en faisant varier continûment et progressivement la puissance électromagnétique fournie au coupleur hyperfréquence de façon que l'extrémité de la colonne de plasma balaye le tube, ledit coupleur étant fixe et placé en ladite autre extrémité du tube, le coupleur hyperfréquence étant apte à injecter une onde progressive de surface dans la colonne de plasma, la pression du mélange dans le barreau creux étant maintenue inférieure à $10^4$ Pa, caractérisé en ce que le tube est un barreau creux de silice, en ce que l'on forme au préalable ce barreau creux de silice sur un mandrin, par une méthode de dépôt externe utilisant une torche à plasma, en ce que l'on enlève ensuite le mandrin, ce qui fait apparaître la face interne du barreau creux, et en ce que l'on réalise ensuite ledit dépôt au moins l'intérieur du barreau creux étant maintenu à une température au moins égale à 1000°C.

Par "barreau creux", ou encore "barreau percé axialement", on entend un tube très épais.

Les méthodes de dépôt externe considérées permettent d'aboutir à un dépôt de silice directement vitrifiée, en grande quantité et avec une vitesse de dépôt élevée, les machines pour la mise en oeuvre de ces méthodes étant d'une grande simplicité.

La méthode de dépôt du revêtement vitreux ne compromettant pas les avantages ainsi obtenus, on comprend que le procédé objet de l'invention permette d'aboutir à des fibres peu coûteuses.

En outre, les méthodes de dépôt externe considérées permettent d'aboutir à un dépôt de silice de bonne qualité, conduisant à des fibres de forte résistance mécanique.

On notera également que, compte tenu de l'épaisseur importante de silice déposée sur le mandrin, les techniques MCVD ou PCVD ne permettraient pas de déposer le revêtement vitreux, contrairement à la technique utilisée dans l'invention (génération et entretien du plasma par des ondes de surface), qui s'affranchit des déplacements mécaniques et limite les échanges thermiques avec l'extérieur du barreau.

Selon un mode de mise en oeuvre préféré du procédé objet de l'invention, le mandrin est rigide et épouse le mieux possible la forme d'un cylindre de révolution de diamètre déterminé.

Un tel mandrin, bien calibré et de bon état de surface, permet d'obtenir des fibres optiques ayant de bonnes caractéristiques géométriques.

Selon un mode de mise en oeuvre particulier du procédé objet de l'invention, le mandrin est fait d'un matériau réfractaire ayant un coefficient de dilatation supérieur à celui de la silice.

Selon un autre mode de mise en oeuvre particulier, le mandrin est en silice et enlevé par carrottage et rodage.

De façon avantageuse, en particulier pour la réalisation de fibres optiques monomodes, le procédé objet de l'invention peut comprendre en outre une étape de formation d'une zone tampon d'indice optique sensiblement égal à celui du barreau creux, entre l'étape d'enlèvement du mandrin et l'étape de dépôt du revêtement vitreux, et cette zone tampon est formée de la même manière que le revêtement vitreux, avec un mélange gazeux approprié, en vue d'améliorer la qualité du coeur des fibres optiques obtenues.

De préférence, avant de former le barreau creux, deux tubes de silice sont ajustés sur le mandrin de telle manière que les extrémités du barreau creux ultérieurement formé recouvrent respectivement ces tubes en partie.

On facilite ainsi la manipulation du barreau creux lorsque celui-ci est formé et la mise en oeuvre de la méthode de dépôt du revêtement vitreux.

Dans un mode de mise en oeuvre particulier de l'invention, après le dépôt du revêtement vitreux, le barreau creux est scellé en ses deux extrémités à l'aide des deux tubes.

De préférence, l'extrémité de chaque tube, extrémité qui est en regard de l'extrémité correspondante du mandrin, comporte un renflement.

De tels renflements permettent notamment la formation du barreau creux avec une perte de matière minimale.

Le procédé objet de la présente invention sera mieux compris à la lecture de la description qui suit, d'exemples de mises en oeuvre, donnés à titre purement indicatif et nullement limitatif, en référence aux dessins annexés sur lesquels :
- la figure 1 est une vue schématique d'un dispositif pour la mise en oeuvre d'une méthode de dépôt externe utilisée dans l'invention,
- la figure 2 est une vue schématique d'un barreau creux de silice formé par cette méthode, autour d'un mandrin,
- la figure 3 est une vue schématique de ce barreau creux, le mandrin ayant été enlevé,
- la figure 4 est une vue schématique d'un mode de réalisation particulier de tubes de silice prévus pour être ajustés sur le mandrin représenté sur la figure 2, avant la formation du barreau creux de silice,
- la figure 5 est une vue schématique d'un mode de réalisation particulier d'un dispositif pour la mise en oeuvre d'une méthode utilisée dans l'invention pour le dépôt d'un revêtement vitreux sur la face interne du barreau creux,
- la figure 6 est une vue schématique du barreau muni du revêtement vitreux,
- la figure 7 est une vue en coupe schématique d'une fibre optique obtenue à partir d'un barreau particulier réalisé selon la présente invention,
- la figure 8 est une vue schématique du barreau représenté sur la figure 6, dont les extrémités ont été scellées,
- la figure 9 est une vue schématique de ce barreau soumis à un préétirage-rétreint, et
- les figures 10 et 11 montrent les profils d'indice optique de fibres optiques obtenues à partir de préformes réalisables par la présente invention.

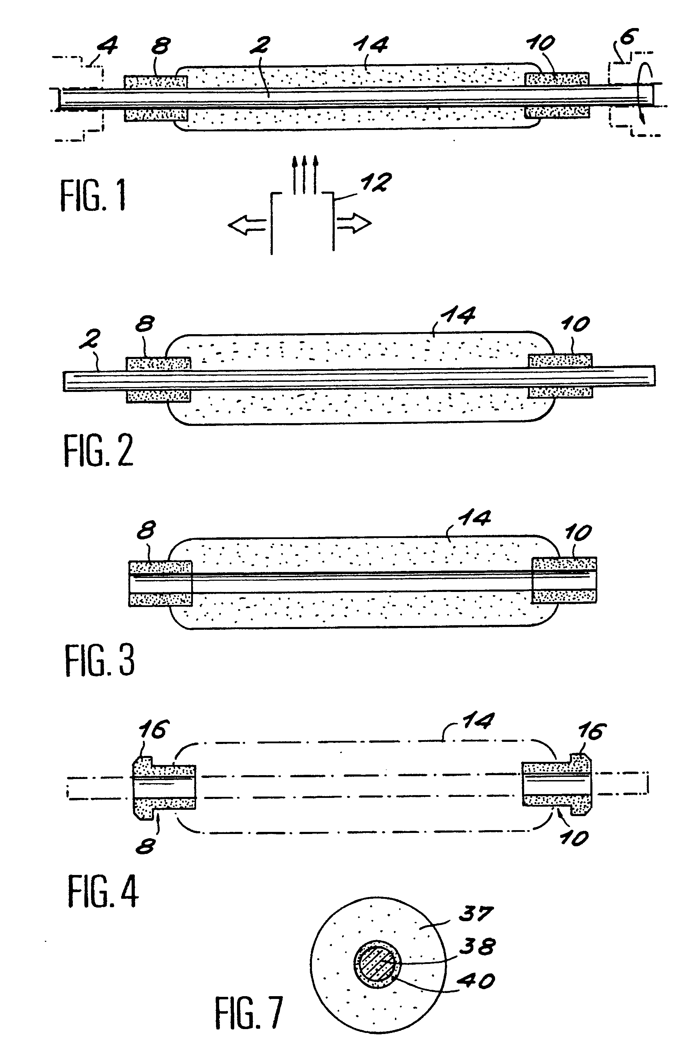

Sur la figure 1, on a représenté schématiquement un dispositif permettant l'obtention d'un barreau creux de silice. Ce dispositif comprend un mandrin rigide 2 fait d'un matériau réfractaire tel que le graphite, l'alumine ou la céramique, dont le coefficient de dilatation est supérieur à celui de la silice. Le mandrin 2 épouse le mieux possible la forme d'un cylindre de révolution (parfait), présente un très bon état de surface et a un diamètre précis.

On peut par exemple utiliser un mandrin de 20 mm de diamètre avec une tolérance de 0,01 mm (ce qui permet d'aboutir à des fibres optiques dont le coeur a un diamètre pour lequel la tolérance est inférieure à 0,01 micron).

Le mandrin 2 est pris entre deux mors 4 et 6 qui peuvent être animés d'un mouvement de rotation uniforme sur une machine précise telle qu'un tour de verrier.

Deux tubes de silice 8 et 10 sont disposés avec un ajustement juste glissant sur le mandrin 2, respectivement des deux côtés de celui-ci, entre les deux mors.

On utilise par exemple des tubes de 20 cm de longueur, de diamètre intérieur 20 mm et de diamètre extérieur 26 mm.

Les tubes de silice 8 et 10 sont séparés d'une distance sensiblement égale à la longueur utile de préforme à réaliser, à 1 ou 2 mm près. Le dispositif comprend également un moyen 12 constitué par une torche à plasma grain à grain lorsque l'on veut réaliser un barreau 14 de silice non dopée, ou par une torche à plasma classique lorsque l'on veut réaliser un barreau de silice dopée.

Le mandrin 2 étant mis en rotation uniforme, la torche à plasma 12 est animée d'un mouvement de translation parallèlement à l'axe de ce mandrin et effectue un nombre d'allers et retours entre les deux tubes 8 et 10, qui dépend de l'épaisseur choisie pour le barreau, celui-ci étant ainsi formé progressivement. La longueur du barreau 14 est choisie légèrement supérieure à la distance entre les deux tubes de façon à permettre un ancrage de ceux-ci et de bien maîtriser les phénomènes dus à l'inversion du sens de déplacement de la torche à plasma.

Le diamètre extérieur et la longueur du barreau creux obtenu (figure 2) sont évidemment choisis en fonction de la capacité de production de fibres optiques recherchée. A titre d'exemple, un diamètre de 50 mm et une longueur de 75 cm permettent d'obtenir une préforme ayant une capacité de l'ordre de 100 km de fibres de 125 microns de diamètre (pour un mandrin de 20 mm de diamètre).

Comme on l'a déjà indiqué, le barreau creux peut être constitué de silice dopée ou non dopée, selon la nature des fibres à produire.

Le fait d'utiliser un mandrin rigide et parfaitement calibré garantit une croissance radiale concentrique du barreau et donc des qualités géométriques excellentes pour les fibres optiques réalisées à partir de ce barreau.

En outre, la croissance de silice directement vitrifiée, grâce à la méthode de dépôt utilisée, permet un contrôle précis de la forme du barreau en cours de réalisation, ce qui permet d'atteindre le diamètre et la régularité voulus pour ce barreau.

Pour fabriquer un barreau de silice non dopée, l'utilisation d'un procédé "torche plasma par pulvérisation grain à grain" autorise des vitesses de croissance de l'ordre de 5 à 10 g/min.

Si l'on souhaite former un barreau de silice dopée, on utilise, comme on l'a vu, un procédé par torche à plasma classique, permettant un dopage au fluor par exemple. On peut ainsi obtenir des fibres dont la gaine est dopée au fluor et dont le coeur est en silice pure, fibres qui présentent un grand intérêt, compte tenu de leur faible atténuation à 1,3 et 1,55 microns.

Dans l'exemple donné plus haut, le mandrin a un diamètre de 20 mm et l'épaisseur du barreau est de 15 mm pour une longueur de 75 cm. D'autres exemples de réalisation sont possibles : un mandrin de 20 mm de diamètre et un barreau de diamètre extérieur 60 mm et de longueur 1 m, ce qui lui donne une capacité de fabrication de 200 km de fibres optiques environ, ou un mandrin de 16 mm de diamètre et un barreau de diamètre extérieur 46 mm pour une longueur de 40 à 60 cm.

Dans un mode de mise en oeuvre particulier de l'invention, on peut combiner les deux méthodes mentionnées plus haut : on peut combiner un dépôt de silice dopée au fluor sur une machine de dépôt par torche à plasma, avec une vitesse de croissance de l'ordre de 0,5 à 1 g/min par exemple et un dépôt de silice pure sur une machine de dépôt "grain par grain" avec une vitesse de croissance de l'ordre de 3 à 10 g/min par exemple.

Une fois le barreau 14 réalisé, il est ôté (figure 2), avec le mandrin, du dispositif représenté sur la figure 1. Le mandrin est ensuite enlevé (figure 3), ce qui ne pose pas de problème du fait que le coefficient de dilatation du matériau constituant le mandrin est supérieur à celui de la silice : le dépôt de silice se faisant à des températures élevées, lorsque le barreau se refroidit, le mandrin se contracte plus que la silice et il se forme un jeu entre le barreau et le mandrin, jeu qui permet l'extraction de ce mandrin.

Au lieu d'utiliser un mandrin en un matériau réfracteur, il est possible d'utiliser un mandrin de silice pure que l'on enlève ensuite par carrotage puis rodage pour obtenir un diamètre intérieur souhaité pour le barreau creux 14.

L'emploi des tubes 8 et 10 permet de bien maîtriser les phénomènes induits à chaque aller-retour de la torche à plasma et facilite la manipulation ultérieure du barreau formé. L'utilisation de tels tubes résente d'autres avantages que l'on verra par la suite.

Les tubes 8 et 10 peuvent être de simples tubes cylindriques, mais dans une réalisation avantageuse, chaque tube peut comporter un renflement 16 (figure 4). Ce renflement est situé à une extrémité de chaque tube 8 ou 10, ces tubes étant alors ajustés sur le mandrin, de façon que les deux renflements soient tournés respectivement vers les extrémités de ce mandrin.

Comme on le voit sur la figure 4, ce renflement, qui présente une symétrie de révolution autour de l'axe du tube, a, vu en coupe, un profil comportant par exemple un flanc perpendiculaire à l'axe du tube et tourné vers le reste de celui-ci, suivi d'un segment parallèle à cet axe, lui-même suivi d'un flanc incliné par rapport à l'axe, en direction de l'extrémité du tube.

L'utilisation des renflements permet de former le barreau creux en perdant un minimum de matière (le barreau creux étant formé entre les deux flancs perpendiculaires aux axes des tubes) et chaque renflement constitue une amorce pour des opérations ultérieures d'étirage du barreau ou de fibrage, ce qui diminue le nombre d'opérations annexes dans la fabrication des fibres et la perte de matière lors de cette fabrication. En outre, avec ces renflements, l'homogénéité du dépôt de silice est meilleure.

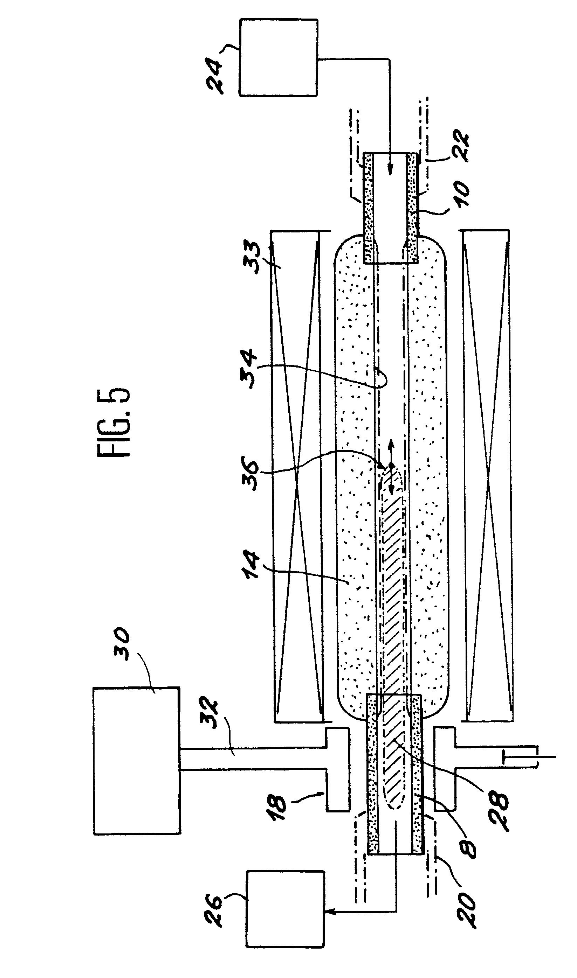

Sur la figure 5, on a représenté schématiquement un dispositif destiné au dépôt d'un revêtement vitreux en silice sur la face interne du barreau creux obtenu. Le dispositif est prévu pour réaliser un dépôt chimique en phase vapeur activé par un plasma créé par une onde de surface et comporte à cet effet un coupleur hyperfréquence 18, par exemple du type SURFAGUIDE. Les tubes d'extrémité 8 et 10 sont avantageusement utilisés dans le dispositif de la figure 5 : le coupleur hyperfréquence 18 entoure l'un de ces tubes, par exemple le tube 8, ce qui permet de réaliser un coupleur de dimensions connues et raisonnables, l'endroit où se trouve ce coupleur étant avantageusement hors de la zone utile de dépôt du revêtement vitreux.

Des embouts tubulaires 20 et 22 sont prévus pour maintenir respectivement les tubes 8 et 10. Le dispositif de la figure 5 comprend également un système 24 prévu pour injecter à travers l'embout 22 (le plus éloigné du coupleur) un mélange gazeux approprié, composé d'oxygène et de vapeur de tétrachlorure de silicium, en vue d'obtenir un revêtement de silice pure, ou le mélange précédent additionné d'un dopant sous forme de fluor ou d'un dérivé de ce dernier, si l'on souhaite un revêtement de silice dopée au fluor. Un dopage au germanium nécessiterait l'addition, au mélange en question, de traces de GeCl$_4$.

Le dispositif de la figure 5 comprend également des moyens de pompage 26 prévus pour pomper le mélange gazeux par l'intermédiaire de l'embout 20.

Lorsque le mélange gazeux circule à l'intérieur du barreau creux 14, une colonne de plasma 28 est formée à l'intérieur du tube grâce à l'onde progressive de surface engendrée par le coupleur 18. Celui-ci est alimenté par un générateur de micro-ondes à puissance variable 30, par l'intermédiaire d'un guide d'ondes 32. Le revêtement vitreux 34 est obtenu en modulant la puissance du générateur 30, ce qui provoque une variation alternative de longueur de la colonne 28 et donc un déplacement du front 36 de cette colonne d'une extrémité à l'autre du barreau creux 14. Le dépôt de silice dopée ou non dopée s'effectue au niveau du front de la colonne de plasma, de sorte qu'en un aller et retour de celle-ci dans le barreau, deux couches vitreuses élémentaires sont déposées à l'intérieur de celui-ci, l'ensemble des couches élémentaires constituant le revêtement vitreux 34.

Le dépôt interne de silice dopée ou non dopée s'effectue avec un rendement excellent (de l'ordre de 100 % pour SiO$_2$ pure et environ 80 % pour SiO$_2$ dopée au Germanium) et une vitesse qui dépend des paramètres suivants : pression à l'intérieur du barreau creux, température de ce barreau, débit du mélange gazeux et puissance du générateur.

Il faut porter l'intérieur du barreau creux où s'effectue le dépôt de revêtement vitreux à une température au moins égale à 1000° C environ, par exemple une température comprise entre 1 000 et 1 200° C. A cet effet, le dispositif représenté sur la figure 5 comporte un four 33, de telle sorte que le barreau creux soit à l'intérieur de ce four, les tubes d'extrémité 8 et 10 dépassant du four, ce four étant prévu pour atteindre les températures voulues.

L'injection du mélange gazeux est réalisée de façon à maintenir, à l'intérieur du barreau creux, une pression comprise entre 10 et 2 500 Pa par exemple.

On peut par exemple moduler la puissance du générateur entre deux valeurs comprises entre 0 et 3 kW environ, avec une fréquence de modulation comprise entre 0 et 10 kHz environ.

Avec le dispositif représenté sur la figure 5, on peut facilement réaliser un dépôt de revêtement vitreux à des vitesses de l'ordre de 0,1 à 0,5 g/min., ce qui est satisfaisant. Notamment dans le cas de la fabrication de fibres optiques monomodes, la vitesse de dépôt n'est pas un facteur critique, compte tenu de la faible quantité de revêtement vitreux à déposer.

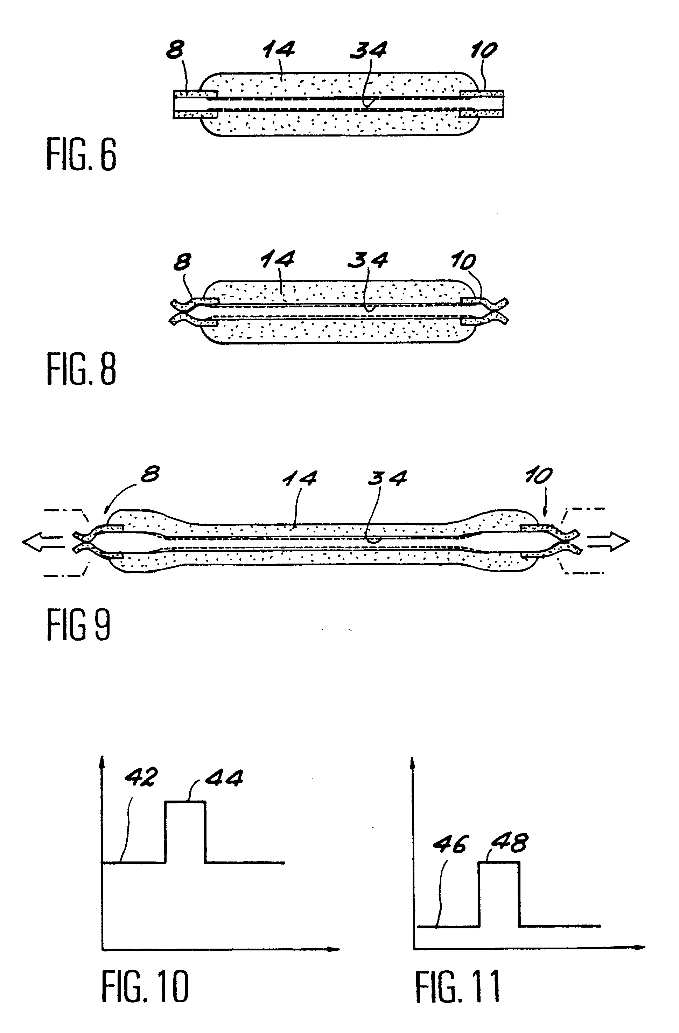

Sur la figure 6, on a représenté schématiquement le barreau creux muni du revêtement vitreux interne 34.

En particulier dans le cas de la fabrication de fibres optiques monomodes, il est avantageux, en vue d'obtenir pour les fibres optiques un coeur qui dans sa totalité est de bonne qualité, de former une zone tampon (non représentée) entre le barreau creux et le revêtement vitreux destiné à la formation du coeur proprement dit. Cette zone tampon est en silice lorsque le barreau creux est en silice pure et en silice dopée lorsque le barreau creux est en silice dopée.

La couche tampon est formée lorsque le barreau creux est dans le dispositif de la figure 5, avant ledit revêtement vitreux 34 et de la même manière que ce dernier (avec un mélange gazeux approprié).

Sur la figure 7, on a représenté en coupe, une fibre optique obtenue à partir d'un barreau creux muni de ladite couche tampon. La fibre comporte une gaine optique 37, un coeur 38 et une couche tampon 40. L'épaisseur de la couche tampon correspondant au barreau creux est par exemple choisie de façon que la couche tampon 40 de la fibre de la figure 7 ait un diamètre extérieur de l'ordre de 14 à 15 microns, pour une fibre dont la gaine a un diamètre externe de 125 microns et le coeur un diamètre de l'ordre de 8 à 10 microns.

Comme on l'a déjà indiqué, la nature de la couche tampon dépend du profil d'indice optique que l'on recherche pour les fibres à fabriquer : par exemple, la couche tampon est en silice dopée au fluor pour une fibre dont la gaine est en silice dopée au fluor et le coeur en silice pure, et la couche tampon est en silice pure pour une fibre dont la gaine est en silice pure et le coeur en silice dopée au germanium.

A titre d'exemple, si le dépôt interne correspond, pour une fibre optique terminée, à un coeur proprement dit de 8 microns de diamètre et à une zone tampon de 3 microns d'épaisseur, ce dépôt correspond à environ 35 grammes de matière pour 100 km de fibre et donc à une épaisseur déposée d'environ 0,35 mm à l'intérieur du barreau creux percé d'un trou de 20 mm de diamètre. Avec une vitesse de dépôt de 0,3 g/min, ceci correspond à un dépôt de 120 min soit environ 50 km de fibre pour une heure.

Avant d'effectuer le dépôt de revêtement vitreux, (et de la couche tampon éventuelle), et en vue de supprimer toute pollution qui aurait pu se produire sur la face interne du barreau creux au cours du transfert de celui-ci d'un dispositif (figure 1) à l'autre (figure 5), on peut effectuer une gravure par plasma de cette face interne à l'aide du dispositif représenté sur la figure 5, en faisant passer à l'intérieur du barreau creux, un mélange gazeux contenant un composé fluoré. L'opération de dépôt du revêtement vitreux (et de la couche tampon éventuelle) a alors lieu immédiatement après cette gravure et ne nécessite ni démontage ni manipulation du barreau creux.

Une fois le revêtement vitreux déposé, le barreau creux est ôté du dispositif de la figure 5 et les tubes d'extrémité 8 et 10 sont scellés afin de préserver l'intérieur du barreau creux contre toute pollution ou toute entrée d'humidité (figure 8).

On obtient ainsi une préforme qui peut ensuite être fibrée directement, sans opération intermédiaire de rétreint. Un scellement du barreau creux sous vide peut faciliter le fibrage de la préforme.

Dans le cas d'un dopage du revêtement vitreux au germanium et en vue d'éviter la volatilisation du germanium au cours d'un rétreint, une légère pression d'oxygène peut cependant être maintenue lors du scellement.

Au lieu d'un fibrage direct de la préforme, on peut tout d'abord effectuer un préétirage-rétreint de ladite préforme, sur une machine d'étirage, afin d'obtenir un barreau de dimensions réduites, par exemple de 39,5 mm de diamètre extérieur, ce qui peut être plus avantageux pour certains équipements de fibrage (figure 9).

Sur la figure 10, on a représenté un profil d'indice d'une fibre optique qui peut être fabriquée à partir d'une préforme obtenue par l'invention. Cette fibre optique est à saut d'indice, la gaine optique (zone 42 du profil) étant en silice pure et le coeur (zone 44 du profil) en silice dopée au germanium.

Dans une autre réalisation, la gaine optique (46) est en silice dopée au fluor tandis que le coeur (48) est en silice pure (figure 11).

D'autres profils d'indice sont possibles et peuvent être obtenus en faisant varier de façon appropriée la composition du mélange gazeux que l'on fait passer à l'intérieur du barreau creux lors du dépôt du revêtement vitreux.

Comme on l'a déjà vu, le mandrin utilisé dans la présente invention permet d'obtenir un barreau creux avec une grande précision géométrique. En outre, dans le cas de la réalisation de fibres optiques monomodes, comme le dépôt interne est alors de faible épaisseur et réalisé avec des vitesses de dépôts non contraignantes, le coeur des fibres obtenues est très bien centré et la qualité géométrique des fibres obtenues est alors complètement indépendante d'opérations complexes comme dans d'autres procédés de fabrication de préformes connus.

Le centrage du coeur est un facteur important pour l'utilisation des fibres monomodes avec des techniques de raccordement simples, et la précision de centrage (0,1 micron) obtenue par le procédé selon l'invention autorise donc de telles techniques.

## Revendications

1. Procédé de fabrication d'une préforme pour fibres optiques, comprenant une étape de dépôt, sur la face interne d'un tube de silice (14), d'un revêtement vitreux (34) destiné à la formation ultérieure du coeur des fibres optiques, le dépôt du revêtement étant réalisé en faisant passer continûment, d'une extrémité à l'autre du tube, un mélange de composés gazeux ionisables et aptes à donner naissance au revêtement par réaction entre eux, tout en formant dans le tube, à l'aide d'un coupleur hyperfréquence (18), une colonne de plasma (28) destinée à activer la réaction, et en faisant varier continûment et progressivement la puissance électromagnétique fournie au coupleur hyperfréquence de façon que l'extrémité (36) de la colonne de plasma balaye le tube, ledit coupleur étant fixe et placé en ladite autre extrémité du tube, le coupleur hyperfréquence étant apte à injecter une onde progressive de surface dans la colonne de plasma, la pression du mélange dans le barreau creux étant maintenue inférieure à $10^4$ Pa, caractérisé en ce que le tube est un barreau creux de silice (14), en ce que l'on forme au préalable ce barreau creux de silice (14) sur un mandrin (2), par une méthode de dépôt externe utilisant une torche à plasma (12), en ce que l'on enlève ensuite le mandrin, ce qui fait apparaître la face interne du barreau creux, et en ce que l'on réalise ensuite ledit dépôt au moins l'intérieur du barreau creux étant maintenu à une température au moins égale à 1000° C.

2. Procédé selon la revendication 1, caractérisé en ce que le mandrin (21) est rigide et épouse le mieux possible la forme d'un cylindre de révolution de diamètre déterminé.

3. Procédé selon l'une quelconque des revendications 1 et 2, caractérisé en ce que le mandrin (2) est fait d'un matériau réfractaire ayant un coefficient de dilatation supérieur à celui de la silice.

4. Procédé selon l'une quelconque des revendications 1 et 2, caractérisé en ce que le mandrin (2) est en silice et enlevé par carrottage et rodage.

5. Procédé selon l'une quelconque des revendications 1 à 4, caractérisé en ce qu'il comprend en outre une étape de formation d'une zone tampon d'indice optique sensiblement égal à celui du barreau creux (14), entre l'étape d'enlèvement du mandrin (2) et l'étape de dépôt du revêtement vitreux (34), et en ce que cette zone tampon est formée de la même manière que le revêtement vitreux (34), avec un mélange gazeux approprié.

6. Procédé selon l'une quelconque des revendications 1 à 5, caractérisé en ce que, avant de former le barreau creux (14), deux tubes de silice (8, 10) sont ajustés sur le mandrin (2) de telle manière que les extrémités du barreau creux ultérieurement formé recouvrent respectivement ces tubes en partie.

7. Procédé selon la revendication 6, caractérisé en ce que, après le dépôt du revêtement vitreux (34), le barreau creux (14) est scellé en ses deux extrémités à l'aide des deux tubes (8, 10).

8. Procédé selon la revendication 6, caractérisé en ce que l'extrémité de chaque tube (8, 10), extrémité qui est en regard de l'extrémité correspondante du mandrin (2), comporte un renflement (16).

9. Procédé selon la revendication 1, caractérisé en ce qu'il comprend en outre une étape de rétreint du barreau, après l'étape de dépôt.

10. Procédé selon la revendication 1, caractérisé en ce que la barreau creux est fait de silice dopée ou de silice non dopée.

11. Procédé selon la revendication 1, caractérisé en ce que le barreau creux comprend un dépôt de silice dopée recouverte d'un dépôt de silice non dopée.

## Claims

1. Process for producing a preform for optical fibres comprising the deposition on the inner face of a silica tube (14) of a vitreous coating (34) to be used for the subsequent formation of the core of the optical fibres, the deposition of the coating being carried out by continuously passing from one end to the other of the tube a mixture of ionizable gaseous compounds able to give rise to the coating by reacting together and whilst forming in the tube, with the aid of an ultra-high frequency coupler (18), a plasma column (28) which serves to activate the reaction and by continuously and progressively varying the electromagnetic power supplied to the ultra-high frequency coupler, so that the end (36) of the plasma column sweeps the tube (2), said coupler being fixed and placed in said other end of the tube, the ultra-high frequency coupler being able to inject a travelling ground wave into the plasma column, the pressure of the mixture in the hollow bar being maintained at below approximately $10^4$ Pa, characterized in that the tube is a hollow silica bar (14) and in that formation takes place beforehand of said hollow silica bar on a mandrel by an external deposition method using a plasma torch (12), in that the mandrel (2) is then removed so that the inner face of the bar (14) appears, and in that said deposition then takes place and at least the interior of the hollow bar is kept at a temperature at least equal to 1000° C.

2. Process according to claim 1, characterized in that the mandrel (21) is rigid and as far as possible adapts to the shape of a cylinder of revolution with a given diameter.

3. Process according to claims 1 or 2, characterized in that the mandrel (2) is made from a refractory material with an expansion coefficient higher than that of silica.

4. Process according to claims 1 or 2, characterized in that the mandrel (2) is made from silica and is removed by coring and grinding.

5. Process according to any one of the claims 1 to 4, characterized in that it also comprises a stage of forming a buffer zone with an optical index substantially equal to that of the hollow bar (14) between the mandrel (2) removal stage and the vitreous coating (34) deposition stage and in that said buffer zone is formed in the same way as the vitreous coating (34) with an appropriate gaseous mixture.

6. Process according to any one of the claims 1 to 5, characterized in that before forming the hollow bar (14), two silica tubes (8, 10) are fitted on the mandrel (2), in such a way that the ends of the subsequently formed hollow bar respectively partly cover these tubes.

7. Process according to claim 6, characterized in that following the deposition of the vitreous coating (34), the two ends of the hollow bar (14) are sealed with the aid of the two tubes (8, 10).

8. Process according to claim 6, characterized in that the end of each tube (8, 10) facing the corresponding end of the mandrel (2) carries an enlargement (16).

9. Process according to claim 1, characterized in that it also comprises a bar shaping stage following the deposition stage.

10. Process according to claim 1, characterized in that the hollow bar is made from doped or undoped silica.

11. Process according to claim 1, characterized in that the hollow bar comprises a doped silica deposit covered by an undoped silica layer.

**Patentansprüche**

1. Verfahren zum Herstellen einer Vorform für optische Fasern, umfassend einen Schritt, bei dem auf einer Innenseite eines Silika-Rohres (14) eine Glasschicht (34) aufgebracht wird, die letztlich zur Bildung des Kerns der optischen Fasern bestimmt ist, wobei der Niederschlag der Schicht in der Weise ausgeführt wird, daß man kontinuierlich vom einen Ende zum anderen Ende des Rohres ein Gemisch aus ionsierbaren gashaltigen Zusammensetzungen hindurchleitet, die dazu geeignet sind, durch Reaktion miteinander die Schicht entstehen zu lassen, wobei in dem Rohr mit Hilfe eines Höchstfrequenzkopplers (18) eine Plasmasäule (28) ausgebildet wird, die dazu bestimmt ist, die Reaktion zu aktivieren, und indem man die dem Höchstfrequenzkoppler zugeführte elektromagnetische Leistung kontinuierlich und progressiv derart variiert, daß das Ende (36) der Plasmasäule das Rohr ausspült, wobei der Koppler fest ist und am anderen Ende des Rohrs angebracht ist, der Höchstfrequenzkoppler dazu geeignet ist, eine fortschreitende Oberflächenwelle in der Plasmasäule zu erzeugen, wobei der Druck der Mischung in dem hohlen Stab unter $10^4$ Pa gehalten wird, dadurch gekennzeichnet, daß das Rohr ein hohler Silika-Stab (14) ist und daß man zuvor diesen hohlen Silika-Stab (14) auf einem Dorn (2) durch ein äußeres Abscheideverfahren unter Verwendung einer Plasmafackel ausbildet, daß man anschließend den Dorn entnimmt, was die Innenseite des hohlen Stabes freilegt und daß man anschließend die genannte Abscheidung ausführt, wobei wenigstens im Innern des hohlen Stabes eine Temperatur von wenigstens 1000° C aufrechterhalten wird.

2. Verfahren nach Anspruch 1, dadurch gekennzeichnet, daß der Dorn (21) starr ist und bestmöglich die Form eines Drehzylinders bestimmten Durchmessers hat.

3. Verfahren nach einem der Ansprüche 1 und 2, dadurch gekennzeichnet, daß der Dorn (2) aus einem feuerfesten Material besteht, das einen Ausdehnungskoeffizienten hat, der größer als der des Silika ist.

4. Verfahren nach einem der Ansprüche 1 und 2, dadurch gekennzeichnet, daß der Dorn (2) aus Silika besteht und durch Kernbohrung und Ausdrehen entfernt wird.

5. Verfahren nach einem der Anrprüche 1 bis 2, dadurch gekennzeichnet, daß es weiterhin einen Schritt enthält, bei dem eine optische Index-Kissenzone im wesentlichen gleich der des hohlen Stabes (14) zwischen dem Entfernen des Dorns (2) und dem Abscheiden der Glasschicht (34) ausgebildet wird, und daß diese Kissenzone in der gleichen Weise gebildet wird, wie die Glasschicht (34) mit einer geeigneten gashaltigen Mischung.

6. Verfahren nach einem der Ansprüche 1 bis 5, dadurch gekennzeichnet, daß vor dem Ausbilden des hohlen Stabes (14) zwei Silika-Rohre (8,10) auf dem Dorn (2) derart angeordnet werden, daß die Enden des schließlich gebildeten hohlen Stabes diese Rohre jeweils teilweise bedecken.

7. Verfahren nach Anspruch 6, dadurch gekennzeichnet, daß nach dem Abscheiden der Glasschicht (34) der hohle Stab (14) an seinen zwei Enden mit Hilfe der zwei Rohre (8,10) versiegelt wird.

8. Verfahren nach Anspruch 6, dadurch gekennzeichnet, daß von jedem Rohr (8,10) das Ende, das dem entsprechenden Ende des Dorns (2) gegenübersteht, eine Wulst (16) aufweist.

9. Verfahren nach Anspruch 1, dadurch gekennzeichnet, daß es weiterhin einen Schritt umfaßt, bei dem der Stab nach dem Abscheiden der Schicht eingeschnürt wird.

10. Verfahren nach Anspruch 1, dadurch gekennzeichnet, daß der hohle Stab aus dotiertem oder nicht-dotiertem Silika hergestellt wird.

11. Verfahren nach Anspruch 1, dadurch gekennzeichnet, daß der hohle Stab eine dotierte Silika-Schicht enthält, die von einer Schicht aus nicht-dotiertem Silika bedeckt ist.

FIG. 1

FIG. 2

FIG. 3

FIG. 4

FIG. 7

FIG. 5

EP 0 250 326 B1

FIG. 6

FIG. 8

FIG 9

FIG. 10

FIG. 11